# NEUE EUROPÄISCHE PATENTSCHRIFT

(11) **EP 2 092 204 B2**
(45) Veröffentlichungstag und Bekanntmachung des Hinweises auf die Entscheidung über den Einspruch: **26.10.2022**
(45) Hinweis auf die Patenterteilung: 15.08.2012
(21) Anmeldenummer: 07846591.1
(22) Anmeldetag: 15.11.2007
(51) Int. Cl.: F16C 19/38, F16C 33/60

(54) **WÄLZLAGER, INSBESONDERE MITTENFREIES GROSSWÄLZLAGER**
ROLLING BEARING, IN PARTICULAR CENTRELESS LARGE ROLLING BEARING
ROULEMENT, NOTAMMENT ROULEMENT DE GRAND GABARIT SANS CENTRE

(30) Priorität: 16.11.2006 DE 102006054453
(43) Veröffentlichungstag der Anmeldung: 26.08.2009
(73) Patentinhaber: thyssenkrupp rothe erde Germany GmbH, 44137 Dortmund (DE)
(72) Erfinder: MALZER, Thomas, 59437 Werl-Holtum (DE); PALMER, Andreas, 59597 Erwitte (DE); KAESLER, Andreas, 59597 Erwitte (DE)
(74) Vertreter: Lorenz, Bernd Ingo Thaddeus
(86) Internationale Anmeldenummer: PCT/EP2007/009859
(87) Internationale Veröffentlichungsnummer: WO 2008/058729

(56) Entgegenhaltungen:
- EP-A- 0 158 015
- EP-A2- 0 158 015
- WO-A2-2008/088213
- DE-A1- 1 425 038
- DE-A1- 2 634 776
- DE-A1- 2 647 588
- GB-A- 2 083 572
- JP-A- S6 145 496
- US-A- 4 126 361

## Beschreibung

Die Erfindung bezieht sich auf ein Wälzlager, insbesondere mittenfreies Großwälzlager, bestehend aus zwei konzentrischen Laufringen, von denen der eine Laufring eine umlaufende zum anderen Laufring hin offene Nut, und der andere Laufring nur einen umlaufenden, mit allseitigem Abstand in die Nut eingreifenden Nasenring besitzt, wobei zwischen der Mantelfläche des Nasenringes einerseits und einer korrespondierenden Fläche in der Nut andererseits ein Wälzlager aus Zylinderrollen zur Aufnahme von Radialkräften, und zwischen den Stirnflächen des Nasenringes und korrespondierenden Stirnflächen der Nut andererseits zur Aufnahme von Axialkräften je eine Reihe von Zylinderrollen vorgesehen ist und wobei der die Nut enthaltende Laufring aus einem Haltering und einem Tragring besteht.

Aus der EP 413 119 B1 ist ein mittenfreies Großwälzlager bekannt, bei dem ebenfalls ein Tragrollenlager und ein Halterollenlager sowie ein Radialrollenlager zwischen einer radial nach außen gerichteten Nase eines Innenringes und einer u-förmig ausgebildeten Aussparung des Außenringes angeordnet sind. Ansonsten ist zwischen Innen- und Außenring jeweils ein Spalt vorhanden, um möglichst keine zusätzliche Reibung zwischen den sich gegeneinander bewegenden Flächen der beiden Ringe zu verursachen. Bei derartigen Großwälzlagern kann es bei großen Durchmessern erforderlich sein, dass Steifigkeitsdefizite aus der Anschlußkonstruktion durch das Großwälzlager kompensiert werden.

Aus der DE 30 34 008 A1 ist eine mittenfreie Wälzlager-Drehverbindung ersichtlich, bei der im Bereich der der Tragreihe gegenüberliegenden, nur abhebende Kippmoment aufnehmenden Haltereihe kreisbogenförmige Abschnitte vorgesehen sind, um bei Auftreten von hohen Kippmomenten eine Verformung zu vermeiden. In diesen Übergangsbereichen sind in den Laufringen jeweils Kugelrillen zur Aufnahme von Kugeln oder kreisbogenförmigen Elementen angeordnet. Eine ausreichende Sicherung gegen ein Ablösen, das heißt Entfernen der Laufringe voneinander in radialer Richtung ist auch hierbei nicht gegeben.

In der EP 158 015 A2 ist ein mittenfreies Großwälzlager in Doppelbauweise mit drei Lagerringen beschrieben, von denen zwei unabhängig voneinander und gegenüber dem dritten verdrehbar sind, und zwischen diesen angeordneten Wälzkörperreihen zum drehbeweglichen Verbinden zweier Bauteile, wobei ein Mittelring mit einem ersten Bauteil und ein Außenring oder ein Innenring mit einem zweiten Bauteil fest verbindbar ist. Drehbeweglich miteinander verbundene Bauteile sollen hierbei in besonderen Fällen auch nach Ausfall der sie verbindenden Wälzlagerung in der Lage sein, über einen weiteren Zeitraum ihre Funktion zu erfüllen. Hierfür werden Großwälzlager in Doppelbauweise mit drei Lagerringen und zwischen diesen angeordneten Wälzkörperreihen eingesetzt. Ziel ist es dabei, ein Lager zu schaffen, bei dem einerseits das bereitstehende Ersatzlager nicht bereits beim Betrieb des ersten Lagers der vollen Betriebsbelastung ausgesetzt wird und andererseits nach Ausfall des ersten Lagers auf einfache und wirtschaftliche Art das bereitstehende, Lager eingesetzt werden kann. Der jeweils nicht belastete Außen- oder Innenring ist mit einem ausreichenden Abstand zum Bauteil angeordnet, sodass es während des Betriebes zu keiner Berührung und Kraftübertragung kommt.

Aus der DE 26 47 588 A1 ist schließlich ein Großwälzlager in Segmentbauweise ersichtlich, bei dem der eine Lagerring im Querschnitt als einteiliges T-Profil ausgeführt ist, während der andere Lagerring dieses einseitige T-Profil bis auf dessen Steg vollständig umschließt. Dazu sind insbesondere die beiden seitlichen Stege des T-Profiles U-förmig umschlossen und jeweils mit zwei gegenüberliegenden axialen und einem Radiallager versehen. Insgesamt besitzt dieses Großwälzlager sechs einzelne Rollenlager, die auf Laufdrähten abwälzen. Hierbei handelt es sich um ein aus vielen Einzelelementen zusammengesetztes Lager.

Der Erfindung liegt die Aufgabe zu Grunde, eine verbesserte Konstruktion des Wälzlagers vorzuschlagen, bei der die unerwünschte Verformung der Nase bzw. des Nasenringes verhindert oder zumindest verringert wird und es nicht zu einer Ablösung der Laufringe in radialer Richtung kommt.

Die Lösung dieser Aufgabe ist im Patentanspruch 1 angegeben, wobei vorgeschlagen wird, dass am Tragring ein sich in axialer Richtung erstreckender und dem Laufring zugewandter Vorsprung angeordnet ist und dass zwischen dem Vorsprung und dem Nasenring ein zusätzliches Wälzlager mit Zylinderrollen angeordnet ist, so dass der Nasenring in axialer und radialer Richtung durch genau zwei gegenüberliegende Wälzlager aus Zylinderrollen geführt ist.

Auf diese Weise besitzt das erfindungsgemäße Wälzlager insgesamt vier sich paarweise gegenüberliegende Rollenlager, von denen zwei den Nasenring in axialer und zwei in radialer Richtung umschließen und bei der Drehbewegung führen. Das erfindungsgemäße zusätzliche Radialrollenlager kann zusätzlich Lasten in radialer Richtung aufnehmen und verhindert ein Ablösen der Laufringe in radialer Richtung.

Der Tragring, an dem der Vorsprung angeordnet ist und der sich in axialer Richtung erstreckt, kann zur Verbesserung der Fertigung und/oder Montage vorzugsweise aus zwei oder mehr Ringen ausgeführt sein.

Ebenso hat es sich als günstig erwiesen, die Zylinderrollen für die radiale Führung der Ringe in axialer Richtung versetzt anzuordnen.

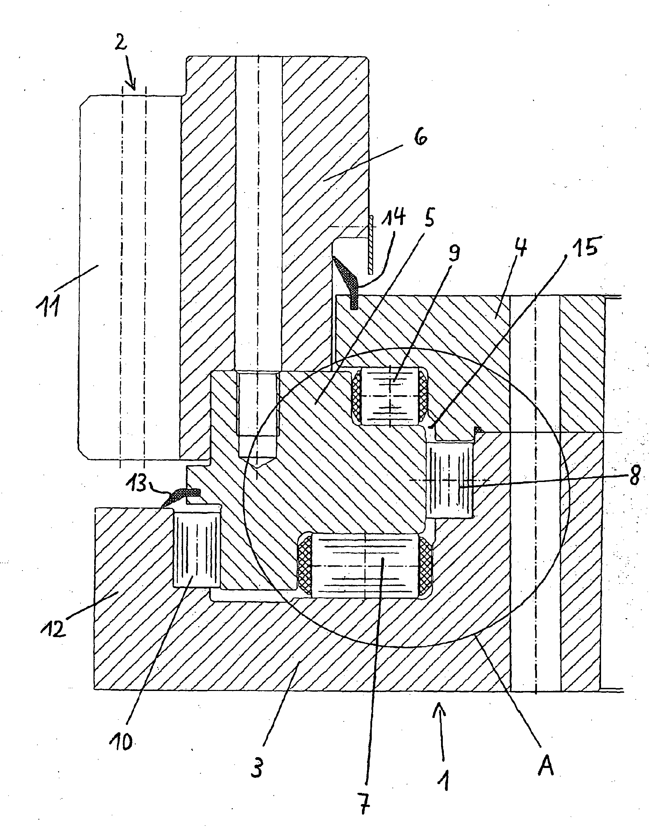

Die Erfindung wird anhand der beigefügten Figur beispielsweise näher erläutert.

Das dargestellte Großwälzlager besteht aus einem Innenring 1 und einem Außenring 2, zwischen denen auf vorzugsweise gehärteten Laufbahnen die Zylinderrollen 7 - 10 direkt abwälzen. Sowohl der Innenring 1 als auch der Außenring 2 sind zweigeteilt ausgeführt. Der Innenring 1 besteht aus dem Tragring 3 und dem damit verschraubbaren Haltering 4, die zusammen eine Nut 15 für den Nasenring 5 bilden. Der Außenring 2 besteht aus dem Zahnring 6 mit der nach außen gerichteten Verzahnung 11 und dem mit dem Zahnring 6 verschraubten Nasenring 5. Das Wälzlager besteht aus der, mit dem Kreis A dargestellten, an sich bekannten dreireihigen Rollendrehverbindung mit den Tragrollen 7 und der Halterolle 9, die die Nase des Nasenringes 5 in axialer Richtung führen und den Radialrollen 8 für die Radialführung. Erfindungsgemäß sind an der den Radialrollen 8 gegenüberliegenden Seite des Nasenringes 5 zusätzliche Radialrollen 10 angeordnet, die zwischen dem Vorsprung 12 und dem Nasenring 5 verlaufen. Durch die zusätzlichen Radialrollen 10 sind erfindungsgemäß jeweils genau zwei gegenüberliegende Wälzkörper paarweise in axialer und radialer Richtung vorhanden. Zur Abdichtung des gesamten Wälzlagers ist jeweils zwischen dem Haltering 4 des Innenringes 1 und dem Zahnring 6 des Außenringes 2 sowie zwischen dem Vorsprung 12 des Innenringes 1 und dem Nasenring 5 des Außenringes 2 eine Dichtung 13 bzw. 14 vorhanden.

### Bezugszeichenliste:

- 1: Laufring (Innenring)
- 2: Laufring (Außenring)
- 3: Tragring (von 1)
- 4: Haltering (von 1)
- 5: Nasenring (von 2)
- 6: Zahnring (von 2)
- 7: Zylinderrolle (Tragrolle zwischen 3 und 5)
- 8: Zylinderrolle (Radialrolle zwischen 3 und 5)
- 9: Zylinderrolle (Halterolle zwischen 4 und 5)
- 10: Zylinderrolle (Zusätzliche Radialrolle zwischen 5 und 12)
- 11: Verzahnung (an 6)
- 12: Vorsprung (an 3)
- 13: Dichtung (zwischen 4 und 6)
- 14: Dichtung (zwischen 12 und 5)
- 15: Nut (in 1)

- A: dreireihiges Rollenlager nach dem Stand der Technik

## Patentansprüche

1. Wälzlager, insbesondere mittenfreies Großwälzlager, bestehend aus zwei konzentrischen Laufringen (1, 2), von denen der eine Laufring (1) eine umlaufende zum anderen Laufring (2) hin offene Nut (15), und der andere Laufring (2) nur einen umlaufenden, mit allseitigem Abstand in die Nut (15) eingreifenden Nasenring (5) besitzt, wobei zwischen der Mantelfläche des Nasenringes (5) einerseits und einer korrespondierenden Fläche in der Nut (15) andererseits ein Wälzlager aus Zylinderrollen (8) zur Aufnahme von Radialkräften, und zwischen den Stirnflächen des Nasenringes (5) und korrespondierenden Stirnflächen der Nut (15) andererseits zur Aufnahme von Axialkräften je eine Reihe von Zylinderrollen (7, 9) vorgesehen ist und wobei der die Nut (15) enthaltende Laufring (1) aus einem Haltering (4) und einem Tragring (3) besteht, **dadurch gekennzeichnet, dass** am Tragring (3) ein sich in axialer Richtung erstreckender und dem Laufring (2) zugewandter Vorsprung (12) angeordnet ist, dass zwischen dem Vorsprung (12) und dem Nasenring (5) ein zusätzliches Wälzlager mit Zylinderrollen (10) angeordnet ist, so dass der Nasenring (5) in axialer und radialer Richtung durch genau zwei gegenüberliegende Wälzlager aus Zylinderrollen (7, 8, 9, 10) geführt ist und dass zur Abdichtung der Wälzlager nach außen zwischen den beiden Laufringen (1, 2) jeweils ein umlaufender Dichtring (13, 14) angeordnet ist.

2. Wälzlager nach Anspruch 1, **dadurch gekennzeichnet, dass** die Zylinderrollen (8, 10) in axialer Richtung versetzt angeordnet sind.

3. Wälzlager nach Anspruch 1, **dadurch gekennzeichnet, dass** der Tragring (3) aus zwei oder mehr Ringen zusammengesetzt ist.

4. Wälzlager nach Anspruch 1, **dadurch gekennzeichnet, dass** der Nasenring (5) mit dem Laufring (2) verschraubt ist.

## Claims

1. Rolling bearing, in particular a centre-free large-diameter anti-friction bearing, consisting of two concentric races (1, 2), of which one race (1) has a circumferential groove (15) which is open towards the other race (2), and the other race (2) has only a circumferential lug ring (5) which engages into the groove (15) with spacing on all sides, wherein between the outer surface of the lug ring (5) on the one hand and a corresponding surface in the groove (15) on the other hand there is provided a rolling bearing consisting of cylinder rollers (8) to absorb radial forces and between the end faces of the lug ring (5) and corresponding end faces of the groove (15) on the other hand there is provided in each case a row of cylinder rollers (7, 9) to absorb axial forces and wherein the race (1) containing the groove (15) consists of a holding ring (4) and a supporting ring (3), **characterised in that** an axially extending projection (12) which faces the race (2) is disposed on the support ring (3) and that between the projection (12) and the lug ring (5) an additional rolling bearing with cylinder rollers (10) is disposed so that the lug ring (5) is guided in the axial and radial direction by precisely two opposing rolling bearings consisting of cylinder rollers (7, 8, 9, 10) and **in that** in order to seal the rolling bearings with respect to the outside a circumferential sealing ring (13, 14) is disposed between the two races (1, 2) in each case.

2. Rolling bearing as claimed in claim 1, **characterized in that** the cylinder rollers (8, 10) are disposed offset in the axial direction.

3. Rolling bearing as claimed in claim 1, **characterized in that** the support ring (3) is composed of two or more rings.

4. Rolling bearing as claimed in claim 1, **characterized in that** the lug ring (5) is screwed to the race (2).

## Revendications

1. Palier à roulement, en particulier palier à roulement de grande taille, sans milieu, se composant de deux bagues de roulement (1, 2) concentriques dont une bague de roulement (1) comporte une gorge circulaire (15) ouverte en direction de l'autre bague de roulement (2), l'autre bague de roulement (2) comportant seulement une bague circulaire en saillie (5) s'engageant dans la gorge (15), avec un intervalle de tous les côtés, où il est prévu, entre la surface latérale de la bague en saillie (5) d'une part, et une surface correspondante dans la gorge (15) d'autre part, un palier à roulement prévu pour des rouleaux de cylindres (8) et servant à absorber des forces radiales, et, entre les surfaces frontales de la bague en saillie (5) et les surfaces frontales correspondantes de la gorge (15) servant d'autre part à absorber des forces axiales, il est prévu à chaque fois une rangée de rouleaux de cylindres (7, 9), et où la bague de roulement (1) contenant la gorge (15) se compose d'une bague de retenue (4) et d'une bague support (3), **caractérisé en ce qu'**une partie saillante (12) s'étendant dans la direction axiale et tournée vers la bague de roulement (2) est disposée sur la bague support (3), et **en ce qu'**un palier à roulement supplémentaire prévu pour des rouleaux de cylindres (10) est disposé entre la partie saillante (12) et la bague en saillie (5), de sorte que la bague en saillie (5) est guidée dans la direction axiale et radiale, précisément par deux paliers à roulement opposés prévus pour des rouleaux de cylindres (7, 8, 9, 10) et **en ce qu'**une bague d'étanchéité circulaire (13, 14) est disposée à chaque fois entre les deux bagues de roulement (1, 2), pour assurer l'étanchéité des paliers à roulement, par rapport à l'extérieur.

2. Palier à roulement selon la revendication 1, **caractérisé en ce que** les rouleaux de cylindres (8, 10) sont disposés en étant décalés dans la direction axiale.

3. Palier à roulement selon la revendication 1, **caractérisé en ce que** la bague support (3) est composée de deux bagues ou plus.

4. Palier à roulement selon la revendication 1, **caractérisé en ce que** la bague en saillie (5) est vissée avec la bague de roulement (2).
